# EUROPEAN PATENT APPLICATION

(11) **EP 4 582 741 A1**
(43) Date of publication of application: **09.07.2025**
(21) Application number: 24159519.8
(22) Date of filing: 23.02.2024
(51) Int. Cl.: F23R 3/28, F23R 3/34

(54) **TURBINE ENGINE HAVING A COMBUSTION SECTION WITH A FUEL SUPPLY ASSEMBLY**

(30) Priority: 05.01.2024 IN 202411000996
(71) Applicant: General Electric Company, Schenectady, NY 12345 (US)
(72) Inventor: NAIK, Pradeep, Schenectady, 12345 (US); PAL, Sibtosh, Schenectady, 12345 (US); SAMPATH, Karthikeyan, Schenectady, 12345 (US); COOPER, Clayton Stuart, Schenectady, 12345 (US); VISE, Steven, Schenectady, 12345 (US); BENJAMIN, Michael, Schenectady, 12345 (US); BUCARO, Michael, Schenectady, 12345 (US); WICKERSHAM, Andrew Joseph, Schenectady, 12345 (US)
(74) Representative: Openshaw & Co.

(57) **Abstract**

A turbine engine (10) has a compressor section (12), a combustion section (14), and a turbine section (16) in serial flow arrangement. The combustion section (14) has a combustor liner (42) and dome wall (48, 148, 248, 348, 448, 548) collectively forming at least a portion of a combustion chamber (50, 150, 250, 350, 450, 550). The dome wall (48, 148, 248, 348, 448, 548) has an opening (74, 174, 274, 374). The combustion section (14) has a fuel supply assembly (32, 132, 232, 332, 432, 532) extending through the opening (74, 174, 274, 374). The fuel supply assembly (32, 132, 232, 332, 432, 532) includes a fuel nozzle (34, 134, 234, 334, 434, 534) defining a first fuel/air circuit (F/A1), a series of air injectors (38, 138) and a first fuel injector (186a, 286a, 386a) radially spaced from the fuel nozzle (34, 134, 234, 334, 434, 534) and interspersed with the series of air injectors (38, 138) to define a second fuel/air circuit (F/A2), wherein a first equivalence ratio (ϕ1) of the first fuel/air circuit (F/A1) is greater than a second equivalence ratio (ϕ2) of the second fuel/air circuit (F/A2).

## Description

### TECHNICAL FIELD

The present subject matter relates generally to a turbine engine, and more specifically to a turbine engine having a combustion section including a fuel nozzle.

### BACKGROUND

Turbine engines are driven by a flow of combustion gases passing through the engine to rotate a multitude of turbine blades, which, in turn, rotate a compressor to provide compressed air to a combustor for combustion. The combustor can be provided within the turbine engine and is fluidly coupled with a turbine into which the combusted gases flow.

The use of hydrocarbon fuels in the combustor of a turbine engine is known. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbon (UHC) (e.g., methane and volatile organic compounds that contribute to the formation of atmospheric ozone), and other oxides, including oxides of sulfur (e.g., SO₂ and SO₃).

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic representation of a turbine engine, the turbine engine including a compressor section, a combustion section, and a turbine section.
FIG. 2 is a cross-sectional view of the combustion section from FIG. 1 along line II-II according to one aspect of the disclosure herein.
FIG. 3 is a schematic cross-sectional view taken along line III-III of FIG. 2 illustrating the combustion section.
FIG. 4 is FIG. 3 again with some reference numbers removed for clarity and illustrating the combustion section in operation.
FIG. 5 is an enlarged schematic side cross-sectional view of a portion of a fuel supply assembly suitable for use in the combustion section of FIG. 1 according to one aspect of the disclosure herein.
FIG. 6 is an enlarged schematic side cross-sectional view of a portion of a fuel supply assembly suitable for use in the combustion section of FIG. 1 according to another aspect of the disclosure herein.
FIG. 7 is an enlarged schematic side cross-sectional view of a portion of a fuel supply assembly suitable for use in the combustion section of FIG. 1 according to yet another aspect of the disclosure herein.
FIG. 8 is an enlarged schematic side cross-sectional view of a portion of a fuel supply assembly suitable for use in the combustion section of FIG. 1 according to another aspect of the disclosure herein.
FIG. 9 is an enlarged schematic side cross-sectional view of a portion of a fuel supply assembly suitable for use in the combustion section of FIG. 1 according to another aspect of the disclosure herein and illustrating the fuel supply assembly in operation.
FIG. 10 is FIG. 3 again illustrating dimensions of the fuel supply assembly according to an aspect of the disclosure herein.

### DETAILED DESCRIPTION

Aspects of the disclosure described herein are directed to a turbine engine including a combustion section including a fuel supply assembly. The fuel supply assembly includes a fuel nozzle having a first body. The fuel supply assembly further includes a second body and a third body. The first body defines a fuel channel. A first channel is defined between the first body and the second body. A second channel is defined between the third body and the second body.

The fuel supply assembly is especially well adapted for the use of hydrogen fuel (hereinafter, "H2 fuel"). Specifically, the fuel supply assembly is especially well adapted to feed a flow of gaseous H2 fuel to the combustion chamber. H2 fuels, when compared to traditional fuels (e.g., carbon fuels, petroleum fuels, etc.), have a higher burn temperature and velocity. Further, flashback can occur when using H2 fuels. As used herein, flashback refers to unintended flame propagation when the H2 fuel is combusted. H2 fuel has higher volatility, meaning that once the H2 fuel is combusted or ignited, the flame generated by the ignition of the H2 fuel can expand in undesired location; in other words, flashback can occur. For example, the flame can expand into the fuel nozzle or igniter. The fuel supply assembly, as described herein, ensures flashback of the H2 fuel does not occur. Auto-ignition of the H2 fuel can occur if the H2 fuel is too hot. Auto-ignition of the H2 fuel can be undesirable in certain locations of the combustion section. The fuel supply assembly as described herein ensures that the temperature of the H2 fuel is below the auto-ignition temperature until at least when it is desired to ignite the H2 fuel.

In some aspects, the disclosed combustors can be utilized with gaseous fuel, such as hydrogen. Gaseous fuel, including hydrogen, spreads/disperses at a faster rate than atomized liquid fuel, which can involve less mixing time for the gaseous fuel, fuel mixing tube lengths can be shorter, and the flame from the gaseous fuel may be more likely to spread farther and faster, which can increase the risk of blowout and increase the impact of controlling the flame and limiting flame spread by controlling the dispersion of the gaseous fuel. Flame shaping formations, such as air tubes and flame shaping holes, can help contain gaseous fuel-air mixtures that have lower densities and higher velocities than with liquid fuels. For example, flame shaping formations can contain the gaseous fuel-air mixtures such that the flame velocity matches the flow velocity to provide a stable flame.

In some aspects, the gaseous fuel exits the fuel nozzle with a given speed and then mixes with air for combustion. As the fuel/air mixture burns, the flame propagates upstream. It can be desirable to control or maintain a constant flame in the combustor for ignition of subsequent fuel, and not to continually ignite the fuel with an ignitor.

For purposes of illustration, the present disclosure will be described with respect to a turbine engine (gas turbine engine). It will be understood, however, that aspects of the disclosure described herein are not so limited and that a fuel supply assembly as described herein can be implemented in engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first" and "second" may be used interchangeably to distinguish one component from another and are not intended to signify location or importance of the individual components.

The terms "forward" and "aft" refer to relative positions within a turbine engine or vehicle, and refer to the normal operational attitude of the turbine engine or vehicle. For example, with regard to a turbine engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

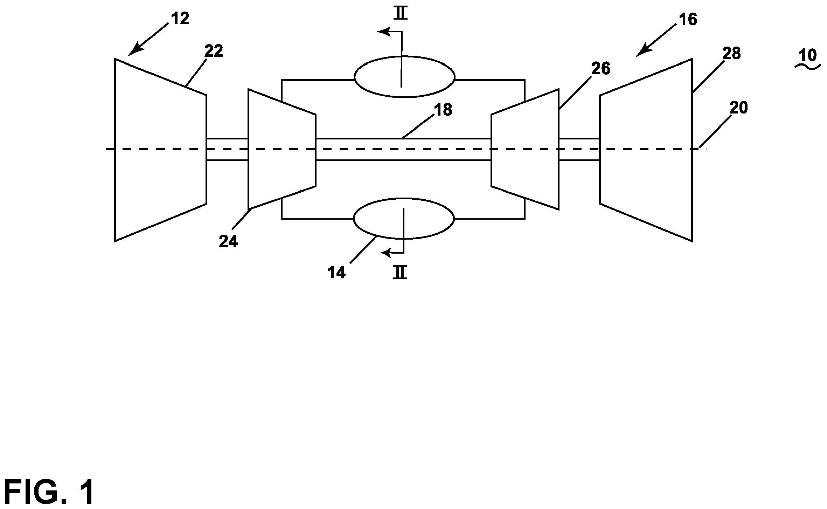

FIG. 1 is a schematic view of a turbine engine 10. As a non-limiting example, the turbine engine 10 can be used within an aircraft. The turbine engine 10 can include, at least, a compressor section 12, a combustion section 14, and a turbine section 16 in serial flow arrangement. A drive shaft 18 rotationally couples the compressor section 12 and the turbine section 16, such that rotation of one affects the rotation of the other, and defines a rotational axis or engine centerline 20 for the turbine engine 10.

The compressor section 12 can include a low-pressure (LP) compressor 22, and a high-pressure (HP) compressor 24 serially fluidly coupled to one another. The turbine section 16 can include an LP turbine 26, and an HP turbine 28 serially fluidly coupled to one another. The drive shaft 18 can operatively couple the LP compressor 22, the HP compressor 24, the LP turbine 26 and the HP turbine 28 together. Alternatively, the drive shaft 18 can include an LP drive shaft (not illustrated) and an HP drive shaft (not illustrated). The LP drive shaft can couple the LP compressor 22 to the LP turbine 26, and the HP drive shaft can couple the HP compressor 24 to the HP turbine 28. An LP spool can be defined as the combination of the LP compressor 22, the LP turbine 26, and the LP drive shaft such that the rotation of the LP turbine 26 can apply a driving force to the LP drive shaft, which in turn can rotate the LP compressor 22. An HP spool can be defined as the combination of the HP compressor 24, the HP turbine 28, and the HP drive shaft such that the rotation of the HP turbine 28 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about the turbine engine 10. It will be appreciated that the representation of the compressor section 12 is merely schematic and that there can be any number of stages. Further, it is contemplated, that there can be any other number of components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section is merely a schematic representation. Further, it is contemplated, that there can be any other number of components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 28 at a downstream end of the combustion section 14.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 28, which drives the HP compressor 24. The combustion gases are discharged into the LP turbine 26, which extracts additional work to drive the LP compressor 22, and the exhaust gas is ultimately discharged from the turbine engine 10 via an exhaust section (not illustrated) downstream of the turbine section 16. The driving of the LP turbine 26 drives the LP spool to rotate the fan (not illustrated) and the LP compressor 22. The pressurized airflow and the combustion gases can together define a working airflow that flows through the fan, compressor section 12, combustion section 14, and turbine section 16 of the turbine engine 10.

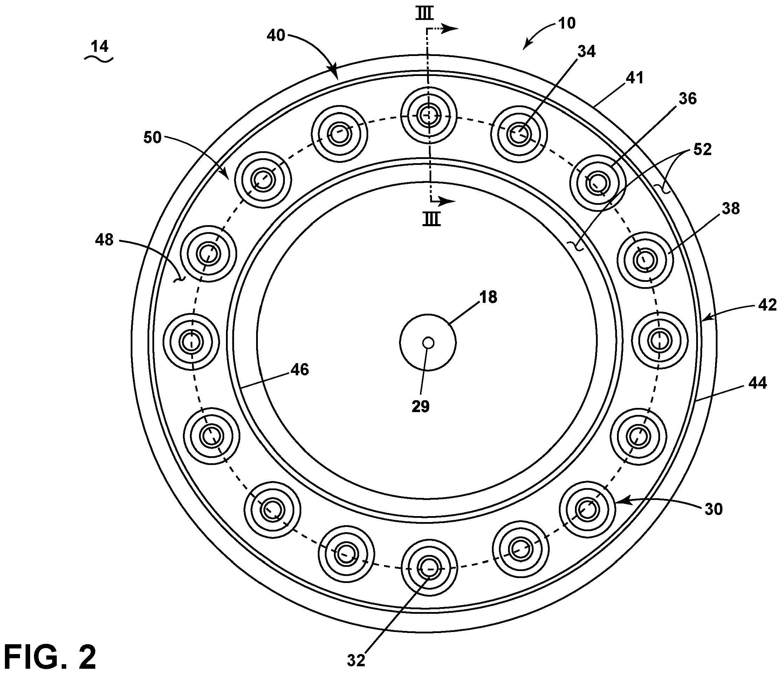

FIG. 2 depicts a cross-sectional view of the combustion section 14 along line II-II of FIG. 1. The combustion section 14 can include a set of fuel supply assemblies 30 annularly arranged about a combustor centerline 29. The combustor centerline 29 can be the engine centerline 20 (FIG. 1) of the turbine engine 10 (FIG. 1). Additionally, or alternatively, the combustor centerline 29 can be a centerline for the combustion section 14, a single combustor, or a set of combustors that are arranged about the combustor centerline 29.

Each fuel supply assembly 32 in the set of fuel supply assemblies 30 includes a fuel nozzle 34, a set of fuel injectors 36, and a series of air injectors 38. The set of fuel supply assemblies 30 can include rich cups, lean cups, or a combination of both rich and lean cups annularly provided about the engine centerline 20. The set of fuel supply assemblies 30 are fluidly connected to a combustor 40. The combustor 40 is defined by a combustor liner 42. The combustor 40 can have a can, can-annular, or annular arrangement depending on the type of engine in which the combustor 40 is located. In a non-limiting example, the combustor 40 can have a combination arrangement as further described herein located within a casing 41 of the engine. The combustor liner 42, as illustrated by way of example, is annular. The combustor liner 42 can include an outer combustor liner 44 and an inner combustor liner 46 concentric with respect to each other and annular about the combustor centerline 29. A dome wall 48 together with the combustor liner 42 can define a combustion chamber 50 annular about the combustor centerline 29. The set of fuel supply assemblies 30 are fluidly coupled to the combustion chamber 50. A compressed air passageway 52 can be defined at least in part by both the combustor liner 42 and the casing 41.

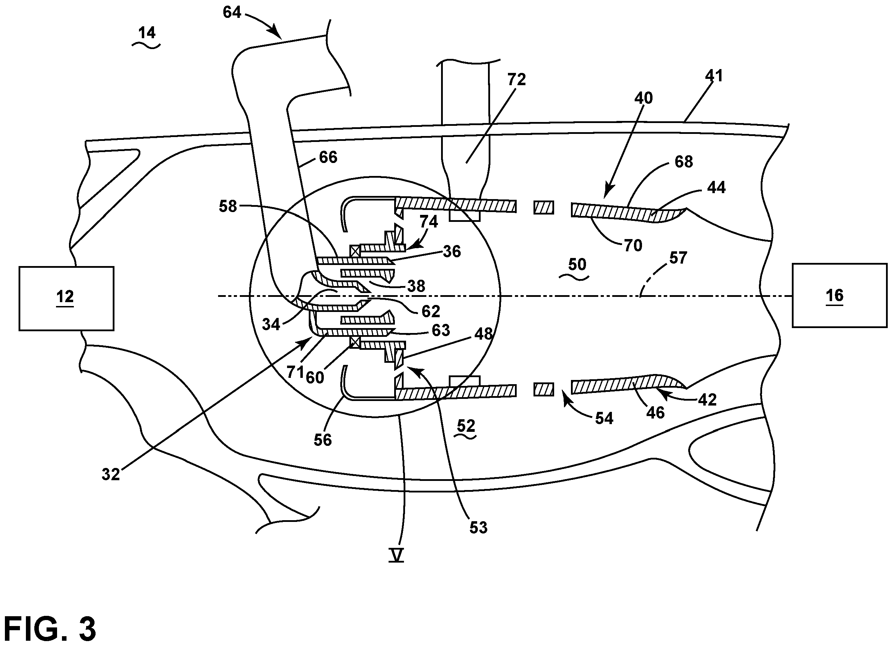

FIG. 3 depicts a cross-section view taken along line III-III of FIG. 2 illustrating the combustion section 14. At least one dilution opening can fluidly connect the compressed air passageway 52 and the combustion chamber 50. By way of example, the at least one dilution opening is illustrated as a set of flame shaping openings 53 passing through the dome wall 48. The at least one dilution opening can further include a set of downstream dilution openings 54 extending through the combustor liner 42.

The fuel supply assembly 32 can be coupled to and disposed within a dome assembly 56. The fuel supply assembly 32 includes the fuel nozzle 34, the set of fuel injectors 36, and the series of air injectors 38 and at least one swirler 60. The fuel nozzle 34 defines a centerline axis 57. The fuel supply assembly 32 is defined by a single monolithic body 58 having concentric walls 71 arranged about the centerline axis 57 and spaced from each other to define the series of air injectors 38. In this manner the series of air injectors 38 are concentrically arranged about the fuel nozzle 34. The fuel nozzle 34 terminates in a first fuel outlet 62. The set of fuel injectors 36 terminates in a second fuel outlet 63. The first fuel outlet 62 and the second fuel outlet 63 both directly fluidly coupled to the combustion chamber 50. The fuel supply assembly 32 is fluidly coupled to a fuel inlet 64 via a passageway 66.

The at least one swirler 60 is any suitable component that is configured to impart a swirling motion to a flow of fluid from an upstream edge of the swirler to a downstream edge of the swirler such that the flow of fluid includes a helical or otherwise swirled flow downstream of the at least one swirler 60. As a non-limiting example, the at least one swirler can be formed as a plurality of airfoils circumferentially spaced within the fuel nozzle 34 to define a fuel swirler and within each of the series of air injectors 38 to define an air swirler. The amount of swirl to the flow can be quantified by a "swirl number", which is a ratio of the axial flux of angular momentum to the axial flux of the axial momentum. The swirl number can be from 0.2 to 1.2. At least one swirler 60 associated with the outer most set of fuel injectors 36 can have zero swirl or low swirl. The swirl number associated with the outer most set of fuel injectors 36 can range from 0 to 0.6.

The dome wall 48 includes an opening 74 through which the fuel supply assembly 32 is received. The fuel supply assembly 32 is separate from the dome wall 48. In other words, the fuel supply assembly 32 is coupled to, but not integrally formed with, the dome wall 48.

Both the inner combustor liner 46 and the outer combustor liner 44 can have an outer surface 68 and an inner surface 70 at least partially defining the combustion chamber 50. The combustor liner 42 can be made of one continuous monolithic portion or be multiple monolithic portions assembled together to define the inner combustor liner 46 and the outer combustor liner 44. By way of non-limiting example, the outer surface 68 can define a first piece of the combustor liner 42 while the inner surface 70 can define a second piece of the combustor liner 42 that when assembled together form the combustor liner 42. As described herein, the combustor liner 42 includes the set of downstream dilution openings 54. It is further contemplated that the combustor liner 42 can be any type of combustor liner 42, including but not limited to a single wall or a double walled liner or a tile liner. An ignitor 72 can be provided at the combustor liner 42 and fluidly coupled to the combustion chamber 50, at any location, by way of non-limiting example upstream of the set of downstream dilution openings 54.

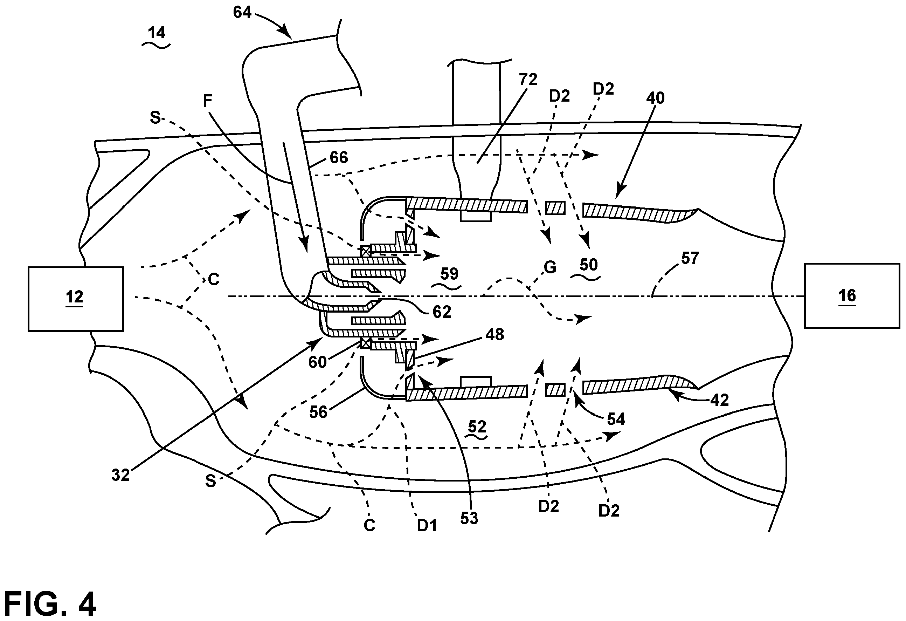

Turning to FIG. 4, the combustion section 14 is illustrated with some reference numbers removed for clarity. During operation, a compressed air (denoted "C") from a compressed air supply, such as the LP compressor 22 or the HP compressor 24 of FIG. 1, can flow from the compressor section 12 to the combustor 40. A portion of the compressed air C can flow through the dome assembly 56. A first part of the compressed air C flowing through the dome assembly 56 can be fed to the fuel supply assembly 32 via the swirler 60 as a swirled airflow (denoted "S"). A flow of fuel (denoted "F") is fed to the fuel supply assembly 32 via the fuel inlet 64 and the passageway 66. The swirled airflow S and the flow of fuel F are mixed by the fuel supply assembly 32 and fed to the combustion chamber 50 as a fuel/air mixture. The ignitor 72 can ignite the fuel/air mixture to define a flame within the combustion chamber 50, which generates a combustion gas (denoted "G"). While shown as starting axially downstream of the first fuel outlet 62, it will be appreciated that the fuel/air mixture can be ignited at or near the first fuel outlet 62.

A second part of the compressed air C flowing through one or more portions of the dome assembly 56 can be fed to the set of flame shaping openings 53 as a first dilution airflow (denoted "D1"). That is, a portion of the compressed air C from the compressor section 12 can flow through the dome wall 48 and into the combustion chamber 50 by passing through the set of flame shaping openings 53.

Another portion of the compressed air C can flow through the compressed air passageway 52 and can be fed to the set of downstream dilution openings 54 as a second dilution airflow (denoted "D2"). In other words, another portion of the compressed air C can flow axially past the dome assembly 56 and enter the combustion chamber 50 by passing through the set of downstream dilution openings 54. That is, compressed air C can flow through the combustor liner 42 and into the combustion chamber 50 by passing through the set of downstream dilution openings 54.

The first dilution airflow D1 can be used to direct the combustion gas G and shape the flame in a primary region 59 of the combustion chamber 50 to maintain the dome wall 48 and the combustor liner 42 at a relatively lower temperature. The second dilution airflow D2 can be used to direct and shape the flame to achieve rapid mixing of combustion gases from the primary region 59. In other words, the set of flame shaping openings 53 extending through the dome wall 48 or the set of downstream dilution openings 54 extending through the combustor liner 42 direct air into the combustion chamber 50, where the directed air is used to control, shape, cool, or otherwise contribute to the combustion process in the combustion chamber 50.

The combustor 40 shown in FIG. 3 is well suited for the use of a hydrogen-containing gas as the fuel because it helps contain the faster moving flame front associated with hydrogen fuel, as compared to traditional hydrocarbon fuels. Blends of hydrogen fuel like hydrogen with methane can be used as the fuel. However, the combustor 40 can be used with traditional hydrocarbon fuels.

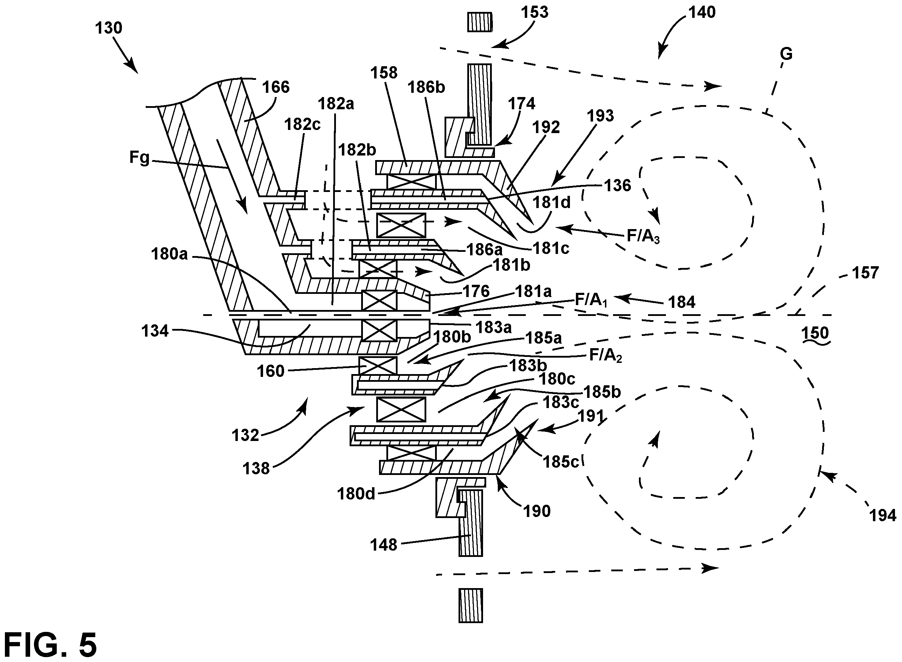

FIG. 5 is an enlarged schematic side cross-sectional view of a portion of a fuel supply assembly 132 suitable for use in the combustion section 14 of FIG. 1. The fuel supply assembly 132 is similar to the fuel supply assembly 32; therefore, like parts will be identified with like names and numerals increased by 100, with it being understood that the description of the fuel supply assembly 32 of FIGS. 2 and 3 applies to the fuel supply assembly 132 unless otherwise noted.

The fuel supply assembly 132 can be part of a set of fuel supply assemblies 130 circumferentially arranged about the combustor centerline 29 as illustrated in FIG. 2. The fuel supply assembly 132 is defined by a single monolithic body 158. The fuel supply assembly 132 includes a fuel nozzle 134, a set of fuel injectors 136, and a series of air injectors 138. The fuel supply assembly 132 is fluidly connected to a combustor 140 and more specifically a combustion chamber 150 of the combustor 140. A dome wall 148 at least partially defines the combustion chamber 150 and includes an opening 174 through which the fuel supply assembly 132 is received. A set of flame shaping openings 153 can extend through the dome wall 148.

The fuel nozzle 134 includes a first air supply conduit 180a terminating in a first air outlet 181a, and extending along a centerline axis 157. A first fuel supply conduit 182a can surround the first air supply conduit 180a. The first fuel supply conduit 182a a can terminate in a tapered end 176. The tapered end 176 can be recessed within the fuel supply assembly 132 where sequential fuel injectors and air injectors are axially spaced increasingly further from the tapered end 176. This enables control of a forward stagnation point and hence a flame position downstream of the tapered end 176.

The first fuel supply conduit 182a terminates in a first fuel outlet 183a defined at least in part by the tapered end 176. The first fuel outlet 183a can be annular about the first air outlet 181a. It is further contemplated that the first fuel outlet 183a provides a discontinuous supply of fuel. By way of non-limiting example, many small and/or discrete openings can define the first fuel outlet 183a. Together the first air outlet 181a and the first fuel outlet 183a define a first fuel/air circuit (denoted "F/A₁") of the fuel supply assembly 132.

The series of air injectors 138 can be multiple air injectors 138 circumscribing the fuel nozzle 134. The series of air injectors 138 can include a first air injector 185a surrounding the fuel nozzle 134. The first air injector 185a is defined by a second air supply conduit 180b terminating in a second air outlet 181b. The second air outlet 181b can be annular about the fuel nozzle 134. It is further contemplated that the second air outlet 181b provides a discontinuous supply of air, by way of non-limiting example many small and/or discrete openings can define the second air outlet 181b.

The set of fuel injectors 136 can be multiple fuel injectors 136 circumscribing the fuel nozzle 134. The set of fuel injectors 136 can include a first fuel injector 186a interspersed within the series of air injectors 138 and radially spaced from the fuel nozzle 134. The first fuel injector 186a is defined by a second fuel supply conduit 182b terminating in a second fuel outlet 183b. The second fuel outlet 183b can be annular about the second air outlet 181b. It is further contemplated that the second fuel outlet 183b provides a discontinuous supply, by way of non-limiting example many small and/or discrete openings can define the second fuel outlet 183b. Together the second air outlet 181b and the second fuel outlet 183b define a second fuel/air circuit (denoted "F/A₂") of the fuel supply assembly 132.

The series of air injectors 138 can include a second air injector 185b surrounding the fuel nozzle 134. The second air injector 185b is defined by a third air supply conduit 180c terminating in a third air outlet 181c. The third air outlet 181c can be annular about the second fuel outlet 183b. It is further contemplated that the third air outlet 181c provides a discontinuous supply of air, by way of non-limiting example many small and/or discrete openings can define the third air outlet 181c.

The set of fuel injectors 136 can include a second fuel injector 186b radially spaced from the fuel nozzle 134. The second fuel injector 186b is defined by a third fuel supply conduit 182c terminating in a third fuel outlet 183c. The third fuel outlet 183c can be annular about the third air outlet 181c. It is further contemplated that the third fuel outlet 183c provides a discontinuous supply, by way of non-limiting example many small and/or discrete openings can define the third fuel outlet 183 c. Together the third air outlet 181c and the third fuel outlet 183c define a third fuel/air circuit (denoted "F/A₃") of the fuel supply assembly 132.

The series of air injectors 138 can include a third air injector 185c surrounding the fuel nozzle 134. The third air injector 185c is defined by a fourth air supply conduit 180d terminating in a fourth air outlet 181d. The fourth air outlet 181d can be annular about the third fuel outlet 183c. It is further contemplated that the fourth air outlet 181d provides a discontinuous supply of air, by way of non-limiting example many small and/or discrete openings can define the fourth air outlet 181d. The fourth air outlet 181d can define a flame shaping stage 184 without fuel to control the shape of the flame.

The first, second, and third fuel supply conduits 182a, 182b, 182c can be fluidly coupled to a single passageway 166. The first, second, third, and fourth air supply conduits 180a, 180b, 180c, 180d and the first, second, and third fuel supply conduits 182a, 182b, 182c can extend any suitable distance or have any suitable cross-section. As a non-limiting example, the corresponding first, second, third, and fourth air outlets 181a, 181b, 181c, 181d and the first, second, and third fuel outlets 183a, 183b, 183c can be axially offset from each other. As illustrated each consecutive outlet can be located axially further downstream from the immediately upstream outlet. In other words, the first air outlet 181a is upstream of the second air outlet 181b and likewise the first fuel outlet 183a is upstream of the second fuel outlet 183b, or the outlets are axially unaligned.

The set of fuel injectors 136 and the series of air injectors 138 are defined by a set of walls 190 separating them into the separate fuel injectors 186a, 186b and air injectors 185a, 185b, 185c described herein. At least one wall in the set of walls 190 can terminate in a set of flow structures 191. The set of flow structures 191 can be angled inward toward the centerline axis 157 to define a first angled flow structure 192. By way of non-limiting example all of the walls in the set of walls 190 terminate in a first angled flow structure 192 angled inward as illustrated to define a nozzle fuel staging assembly 193. The nozzle fuel staging assembly 193 is further defined by the tapered end 176.

At least one swirler 160 can be provided in the fuel nozzle 134. Further, at least one swirler 160 can be provided in at least one of the air injectors 185a, 185b, 185c. By way of non-limiting example, a swirler 160 is located in the fuel nozzle 134 and all of the air injectors 185a, 185b, 185c as illustrated.

In operation the nozzle fuel staging assembly 193 introduces a fuel/air mixture to produce a flame within the combustion chamber 150, which generates combustion gases G with an inward swirl pattern 194. While shown as starting axially downstream of the first fuel outlet 183a, it will be appreciated that the fuel/air mixture can be ignited at or near the first fuel outlet 183a. The inward swirl pattern 194 results in a lower temperature flame and hence NOₓ reduction.

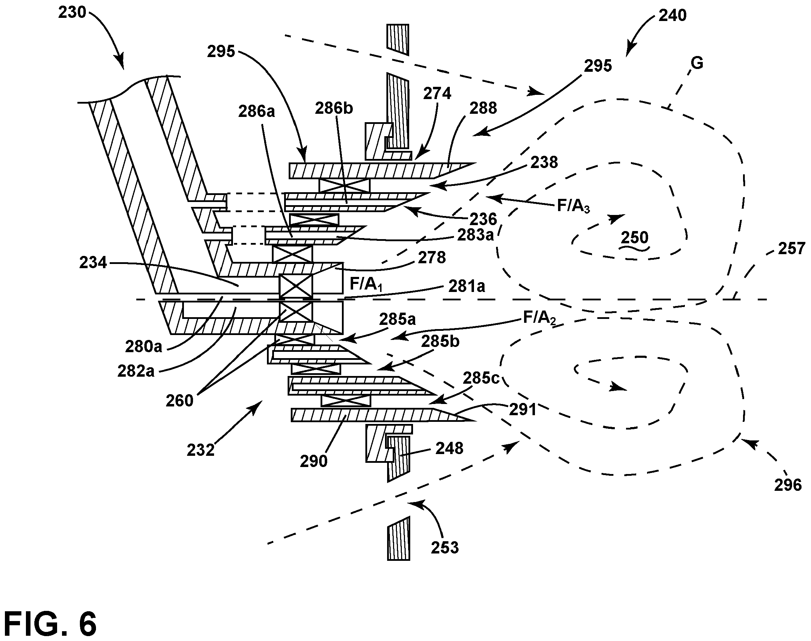

FIG. 6 is an enlarged schematic side cross-sectional view of a portion of a fuel supply assembly 232 suitable for use in the combustion section 14 of FIG. 1. The fuel supply assembly 232 is similar to the fuel supply assembly 132; therefore, like parts will be identified with like names and numerals increased by 100, with it being understood that the description of the fuel supply assembly 132 applies to the fuel supply assembly 232 unless otherwise noted.

The fuel supply assembly 232 can be part of a set of fuel supply assemblies 230 circumferentially arranged about the combustor centerline 29 as illustrated in FIG. 2. The fuel supply assembly 232 includes a fuel nozzle 234, a set of fuel injectors 236, and a series of air injectors 238. The fuel supply assembly 232 is fluidly connected to a combustor 240 and more specifically a combustion chamber 250 of the combustor 240. A dome wall 248 at least partially defines the combustion chamber 250 and includes an opening 274 through which the fuel supply assembly 232 is received. A set of flame shaping openings 253 can extend through the dome wall 248.

The fuel nozzle 234 includes a first air supply conduit 280a terminating in a first air outlet 281a, and extending along a centerline axis 257. A first fuel supply conduit 282a can surround the first air supply conduit 280a. The first fuel supply conduit 282a a can terminate in an enlarged end 278. The first fuel supply conduit 282a terminates in a first fuel outlet 283a defined at least in part by the enlarged end 278. The first fuel outlet 283a can be annular about the first air outlet 281a. It is further contemplated that the first fuel outlet 283 a provides a discontinuous supply of fuel, by way of non-limiting example many small and/or discrete openings can define the first fuel outlet 283a. Together the first air outlet 281a and the first fuel outlet 283a define a first fuel/air circuit F/Ai of the fuel supply assembly 232.

The set of fuel injectors 236 and the series of air injectors 238 are defined by a set of walls 290 separating them into separate fuel injectors 286a, 286b and air injectors 285a, 285b, 285c as previously described herein. At least one wall in the set of walls 290 can terminate in a set of flow structures 291. The set of flow structures 291 can be angled outward away from the centerline axis 257 to define a second angled flow structure 288. By way of non-limiting example all of the walls in the set of walls 290 terminate in the second angled flow structure 288 angled outward as illustrated to define a diffuser fuel staging assembly 295. The diffuser fuel staging assembly 295 is further defined by the enlarged end 278.

At least one swirler 260 can be provided in the fuel nozzle 234. Further, at least one swirler 260 can be provided in at least one of the air injectors 285a, 285b, 285c as previously described herein. By way of non-limiting example, a swirler 260 is located in the fuel nozzle 234 and all of the air injectors 285a, 285b, 285c as illustrated.

In operation the diffuser fuel staging assembly 295 introduces a fuel/air mixture to produce a flame within the combustion chamber 250, which generates combustion gases G with a V-shaped swirl pattern 296. While shown as starting axially downstream of the first fuel outlet 283a, it will be appreciated that the fuel/air mixture can be ignited at or near the first fuel outlet 283a. The V-shape swirl pattern 296 results in a lower flame area and hence NOₓ reduction.

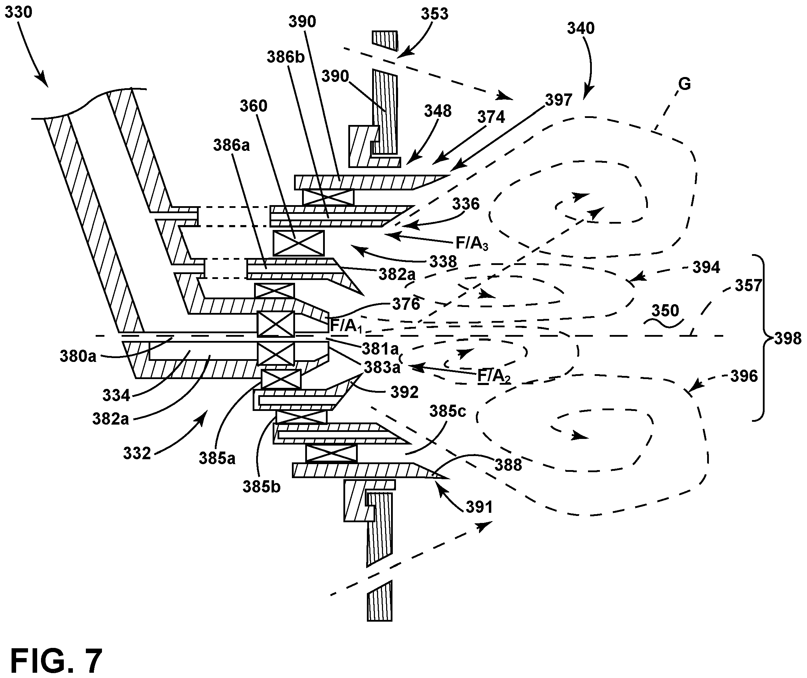

FIG. 7 is an enlarged schematic side cross-sectional view of a portion of a fuel supply assembly 332 suitable for use in the combustion section 14 of FIG. 1. The fuel supply assembly 332 is similar to the fuel supply assembly 132; therefore, like parts will be identified with like names and numerals increased by 200, with it being understood that the description of the fuel supply assembly 132 applies to the fuel supply assembly 332 unless otherwise noted.

The fuel supply assembly 332 can be part of a set of fuel supply assemblies 330 circumferentially arranged about the combustor centerline 29 as illustrated in FIG. 2. The fuel supply assembly 332 includes a fuel nozzle 334, a set of fuel injectors 336, and a series of air injectors 338. The fuel supply assembly 332 is fluidly connected to a combustor 340 and more specifically a combustion chamber 350 of the combustor 340. A dome wall 348 at least partially defines the combustion chamber 350 and includes an opening 374 through which the fuel supply assembly 332 is received. A set of flame shaping openings 353 can extend through the dome wall 348.

The fuel nozzle 334 includes a first air supply conduit 380a terminating in a first air outlet 381a, and extending along a centerline axis 357. A first fuel supply conduit 382a can surround the first air supply conduit 380a. The first fuel supply conduit 382a a can terminate in a tapered end 376. The first fuel supply conduit 382a terminates in a first fuel outlet 383a defined at least in part by the tapered end 376. The first fuel outlet 383a can be annular about the first air outlet 381a. It is further contemplated that the first fuel outlet 383a provides a discontinuous supply of fuel, by way of non-limiting example many small and/or discrete openings can define the first fuel outlet 383a. Together the first air outlet 381a and the first fuel outlet 383a define a first fuel/air circuit F/Ai of the fuel supply assembly 332.

The set of fuel injectors 336 and the series of air injectors 338 are defined by a set of walls 390 separating them into separate fuel injectors 386a, 386b and air injectors 385a, 385b, 385c as previously described herein. At least one wall in the set of walls 390 can terminate in a set of flow structures 391. The set of flow structures 391 can be angled inward toward the centerline axis 357 to define a first angled flow structure 392. The set of flow structures 391 can also be angled outward away from the centerline axis 357 to define a second angled flow structure 388. By way of non-limiting example, the walls in the set of walls 390 defining a first fuel injector 386a and a first air injector 385a terminate in the first angled flow structure 392. The walls in the set of walls 390 defining the remaining fuel injector 386b and remaining fuel air injectors 385b, 385c terminate in the second angled flow structure 388. This combination of flow structures 392, 388 defines a first variable fuel staging assembly 397. The first variable fuel staging assembly 397 is further defined by the tapered end 376.

At least one swirler 360 can be provided in the fuel nozzle 334. Further, at least one swirler 360 can be provided in at least one of the air injectors 385a, 385b, 385c. By way of non-limiting example, a swirler 360 is located in the fuel nozzle 334 and all of the air injectors 385a, 385b, 385c as illustrated.

In operation the first variable fuel staging assembly 397 introduces a fuel/air mixture to produce a flame within the combustion chamber 350, which generates combustion gases G with a combination swirl pattern 398. The combination swirl pattern 398 can include an inward swirl pattern 394 and a V-shaped swirl pattern 396. While shown as starting axially downstream of the first fuel outlet 383a, it will be appreciated that the fuel/air mixture can be ignited at or near the first fuel outlet 383a.

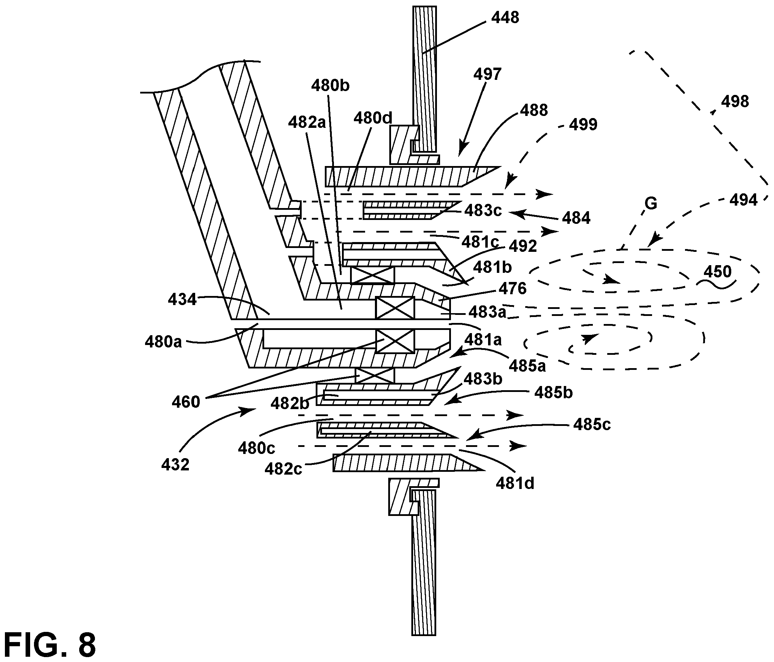

FIG. 8 is an enlarged schematic side cross-sectional view of a portion of a fuel supply assembly 432 suitable for use in the combustion section 14 of FIG. 1. The fuel supply assembly 432 is similar to the fuel supply assembly 332; therefore, like parts will be identified with like names and numerals increased by 100, with it being understood that the description of the fuel supply assembly 332 applies to the fuel supply assembly 432 unless otherwise noted.

The fuel supply assembly 432 is the same as the fuel supply assembly 332 of FIG. 7 except at least one swirler 460 is only provided in a fuel nozzle 434 and a first air injector 485a surrounding the fuel nozzle 434. A second and third air injector 485b, 485c do not include swirlers. An air injector free of swirlers produces an axial flow 499. It is also contemplated that a dome wall 448 does not include any dilution openings. A dilution opening on the dome wall provides control of the shape of the flame by providing inward or axial flow momentum that keep flame in the center of combustor and away from the dome wall and combustor liner wall. When the air injector is free of swirlers, the axial flow 499 controls a radial spread of the flame and shapes the flame to keep hot gases away from the combustor liner and the dome wall thereby improving the combustor hot section life. Since this non swirling feature can control flame shape the dilution opening on the dome wall can be eliminated.

Further, a first, a second, a third, and a fourth air supply conduits 480a, 480b, 480c, 480d along with a first, a second, and a third fuel supply conduits 482a, 482b, 482c can extend any suitable distance or have any suitable cross-section. As a non-limiting example, corresponding first, second, third, and fourth air outlets 481a, 481b, 481c, 481d and first, second, and third fuel outlets 483a, 483b, 483c can be axially aligned. As illustrated each consecutive outlet can be located at the same axial location as the immediately upstream outlet. Alignment can result in movement of the flame downstream of the dome wall 448.

Like the fuel supply assembly 332 of FIG. 7, a combination of flow structures 492, 488 defines a second variable fuel staging assembly 497. The second variable fuel staging assembly 497 is further defined by a tapered end 476.

In operation the second variable fuel staging assembly 497 introduces a fuel/air mixture to produce a flame within a combustion chamber 450, which generates combustion gases G a second combination swirl pattern 498. The second combination swirl pattern 498 can include the axial flow 499 and an inward swirl pattern 494.

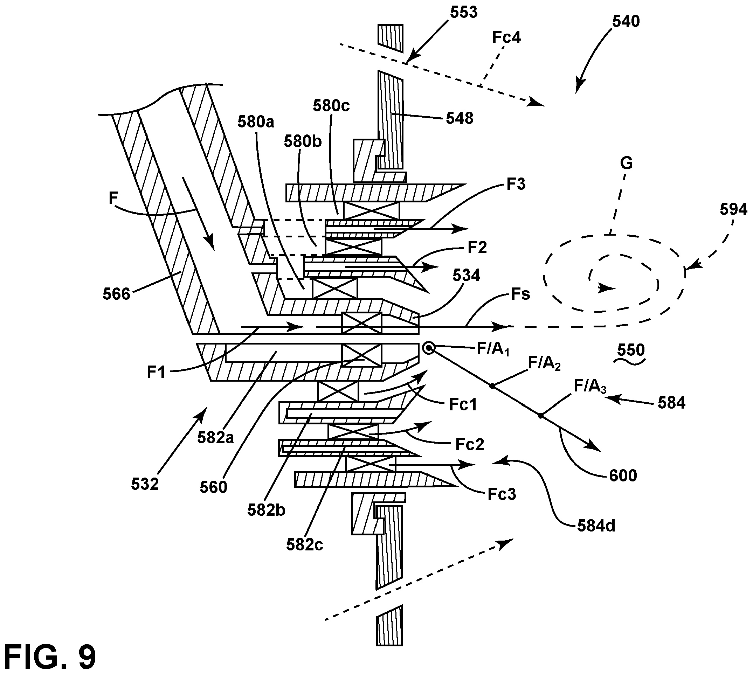

Turning to FIG. 9 an enlarged schematic side cross-sectional view of yet another portion of a fuel supply assembly 532 suitable for use in the combustion section 14 of FIG. 1. The fuel supply assembly 532 has similar features to all the fuel supply assemblies 32, 132, 232, 332, 432 described previously herein. Like parts will be identified with like names and numerals with it being understood that the description of the fuel supply assemblies 32, 132, 232, 332, 432 applies to the fuel supply assembly 532 unless otherwise noted. As the structural components of the fuel supply assembly 532 and a combustor associated with said fuel supply assembly 532 have already been described herein, FIG. 9 illustrates the operation of the fuel supply assembly 532 as can be applied to any of the fuel supply assemblies 32, 132, 232, 332, 432 described herein.

During operation, a flow of fuel (denoted "F") is fed to a fuel nozzle 534 from a passageway 566. The flow of fuel F flows through a first fuel supply conduit 582a and over at least one swirler 560 to define a swirled flow of fuel (denoted "Fs") that is exhausted into a combustion chamber 550. In operation the fuel supply assembly 532 introduces a fuel/air mixture to produce a flame within the combustion chamber 550, which generates combustion gases G with a swirl pattern, by way of non-limiting example an inward swirl pattern 594.

The swirled flow of fuel Fs can be ignited within the combustion chamber 550 or the fuel nozzle 534 through an igniter (not illustrated) or by auto-ignition. The flow of fuel F can contain 100% hydrogen H2 fuel or other fuel, such as methane. Alternatively, the flow of fuel F can be a mixture of H2 fuel and compressed air from, for example, the compressor section (e.g., the compressor section 12 of FIG. 1).

The flow of fuel F can be split into parts such that a first flow of fuel (denoted "F1") is fed to and through a first fuel supply conduit 582a, a second flow of fuel (denoted "F2") is fed to and through a second fuel supply conduit 582b, and a third flow of fuel (denoted "F3") is fed to and through a third fuel supply conduit 582c.

A flow of compressed air (e.g., the compressed air C of FIG. 4) is fed to various portions of the fuel supply assembly 532. As a non-limiting example, a first flow of compressed air (denoted "Fc1") is fed to and through a first air supply conduit 580a, a second flow of flow of compressed air (denoted "Fc2") is fed to and through a second air supply conduit 580b, a third flow of compressed air (denoted "Fc3") is fed to and through a third air supply conduit 580c, and a fourth flow of compressed air (denoted "Fc4") is fed to and through a set of flame shaping openings 553 formed in a dome wall 548.

The first flow of compressed air Fc1, the second flow of compressed air Fc2, the third flow of compressed air Fc3, the fourth flow of compressed air Fc4, or a combination thereof, can be from the same or different sources of compressed air. As a non-limiting example, the first flow of compressed air Fc1 can be from the HP compressor (e.g., the HP compressor 24 of FIG. 1), while the second flow of compressed air Fc2 can be from the LP compressor (e.g., the LP compressor 22 of FIG. 1). As a non-limiting example, each of the first flow of compressed air Fc1, the second flow of compressed air Fc2, the third flow of compressed air Fc3, and the fourth flow of compressed air Fc4 can each be a flow of compressed air from the compressor section.

The first flow of compressed air Fc1, the second flow of compressed air Fc2, the third flow of compressed air Fc3, and the fourth flow of compressed air Fc4 are used to shape the flame (e.g., provide a desired footprint of the physical flame within the combustion chamber 550), and insulate various portions of a combustor 540 from the flame. The flame shaping is done by forming an annular curtain of compressed air around the flame. As a non-limiting example, the first air supply conduit 580a is oriented such that the first flow of compressed air Fc1 exhausting therefrom forms an annular curtain of compressed air around the swirled flow of fuel Fs. The annular curtain of compressed air, in turn, directs the flame or otherwise the swirled flow of fuel Fs in a desired direction and keeps the flame within desired boundaries at least partially defined by the annular curtain of compressed air. The annular curtain of compressed air further insulates various portions of the combustor 540 (e.g., the dome wall 548, the combustor liner, etc.) from the heat of the flame by providing a layer of insulation between the flame and the various portions other or otherwise cooling the various portions.

While not illustrated, a controller module can be located anywhere in the engine 10 (FIG. 1) and be communicatively coupled to a set of valves in order to automatically control a flow of fluids to or within respective portions of the fuel supply assembly 532. As a non-limiting example, the controller module can automatically control a supply of the flow of fuel F to the passageway 566. As a non-limiting example, the controller module can automatically control a supply of the first flow of compressed air Fc1 to the first air supply conduit 580a. As a non-limiting example, the controller module can automatically control a supply of the second flow of compressed air Fc2 to the second air supply conduit 580b. As a non-limiting example, the controller module can automatically control a supply of the third flow of compressed air Fc3 to the third air supply conduit 580c. As a non-limiting example, the controller module can automatically control a supply of the fourth flow of compressed air Fc4 to the set of flame shaping openings 553. The flow of fuel F, the first flow of compressed air Fc1, the second flow of compressed air Fc2, the third flow of compressed air Fc3, and the fourth flow of compressed air Fc4 can be controlled independently of one another. As a non-limiting example, a flow of compressed air C can be shut off to the set of flame shaping openings 553 but be sent to the first air supply conduit 580a.

The shaping of the flame and insulation between the flame and other portions of the combustor 540 is especially important when utilizing a gaseous H2 fuel in comparison with traditional fuels. The gaseous H2 fuel has a higher burn temperature and tendency for flashback compared to the traditional fuels. As such, at least one of the first flow of compressed air Fc1, the second flow of compressed air Fc2, the third flow of compressed air Fc3, the fourth flow of compressed air Fc4, or a combination thereof is used to push the flame away from the fuel supply assembly 532. The pushing of the swirled flow of fuel Fs away from the fuel supply assembly 532 helps ensure that flashback into the fuel nozzle 534 of the swirled flow of fuel Fs, once ignited, does not occur. At least one of the first flow of compressed air Fc1, the second flow of compressed air Fc2, the third flow of compressed air Fc3, the fourth flow of compressed air Fc4, or a combination thereof further ensures that the flame, which burns hotter than a flame generated from the traditional fuels, does not overly heat sections of the combustor 540. At least one of the first flow of compressed air Fc1, the second flow of compressed air Fc2, the third flow of compressed air Fc3, the fourth flow of compressed air Fc4, or a combination thereof can further be used to create a uniform flame distribution at the combustor outlet. It is contemplated that a uniform flame distribution or temperature distribution at the combustor outlet results in a higher efficiency of the turbine section.

A sequential fuel staging 600 as illustrated by an arrow is enabled by the structure of the fuel supply assemblies 32, 132, 232, 332, 432, 532 described herein. A first fuel/air circuit F/Ai of the sequential fuel staging 600 has a first equivalence ratio (denoted "φ₁") that ranges from 0.5 to 2. In one non-limiting example the first equivalence ratio φ₁ is less than 1.0. A second and third fuel/air circuit F/A₂, F/A₃ of the sequential fuel staging 600 have corresponding second and third equivalence ratios (denoted "φ₂" and "φ₃") both of which are less than the first equivalence ratio φ₁. In a non-limiting example, the second equivalence ratio φ₂ is greater than the third equivalence ratio φ₃. In another non-limiting example, the second and third equivalence ratios φ₂, φ₃ are equal to each other. In yet another non-limiting example, the second equivalence ratio φ₂ is less than the third equivalence ratio φ₃. Both of the second and third equivalence ratios φ₂, φ₃ range from 0.5 to 0.9. A flame shaping stage 584 can circumscribe the fuel/air circuits (F/A₁, F/A₂, F/A₃) without fuel for controlling the shape of the flame. A sequential decrease in the fuel and air from center of fuel nozzle to radial outward direction helps to sequentially reduce the flame temperature from a smaller area to a bigger area and hence reduce the region of high temperature and hence NOₓ emissions.

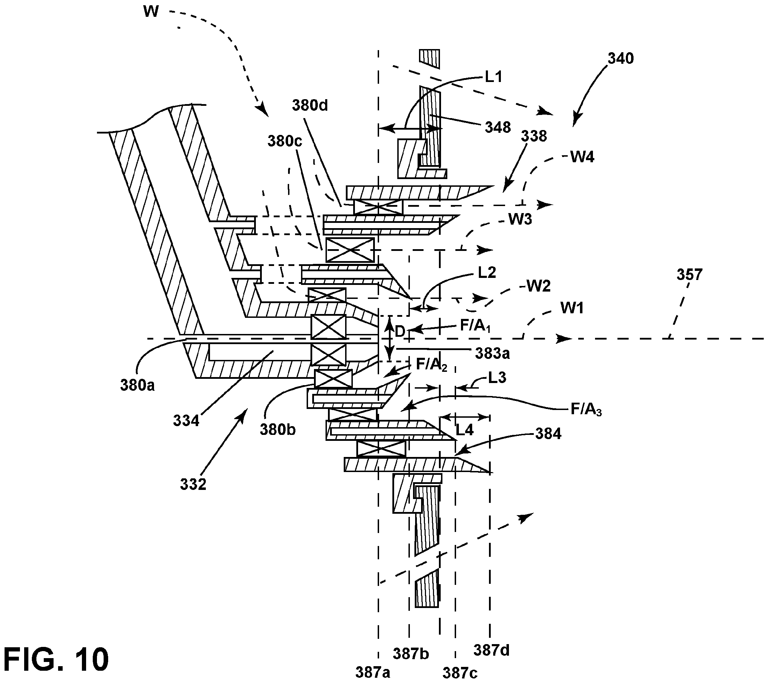

Turning to FIG. 10, the fuel supply assembly 332 from FIG. 7 is illustrated, however all dimensions shown can be applied to any of the fuel supply assemblies 32, 132, 232, 332, 432, 532 described herein.

A diameter (denoted "D") is defined as the outer diameter of the fuel nozzle 334 at the first fuel outlet 383a. A first length (denoted "L1") is measured along the centerline axis 357 from a first distal end 387a of a first fuel/air circuit F/Ai defined by the fuel nozzle 334 to a front of the dome wall 348. The first length L1 is a function of the diameter D and ranges from -4D to 4D. A second length (denoted "L2") is measured along the centerline axis 357 from a second distal end 387b of a second fuel/air circuit F/A₂ to a front of the dome wall 348. The second length L2 is a function of the diameter D and ranges from -4D to 4D. A third length (denoted "L3) is measured along the centerline axis 357 from a third distal end 387c of a third fuel/air circuit F/A₃ to a front of the dome wall 348. The third length L3 is a function of the diameter D and ranges from -3D to 3D. A fourth length (denoted "L4") is measured along the centerline axis 357 from a fourth distal end 387d of a flame shaping stage 384 to a front of the dome wall 348. The fourth length L4 is a function of the diameter D and ranges from -2D to 5D.

The fuel supply assembly 332 is allocated 10% to 45% of a total amount of compressed air C (FIG. 3) provided to the combustor 340 to define an individual air supply amount (denoted "W"). Each of the series of air injectors 338 is allotted an amount of the individual air supply amount W. The first air supply conduit 380a is allotted a first air supply (denoted "W1") that ranges from 0% to 5% of the individual air supply amount W. A second air supply conduit 380b is allotted a second air supply (denoted "W2") that ranges from 10% to 45% of the individual air supply amount W. A third air supply conduit 380c is allotted a second air supply (denoted "W3") that ranges from 15% to 55% of the individual air supply amount W. A fourth air supply conduit 380d is allotted a fourth air supply (denoted "W4") that ranges from 0% to 65% of the individual air supply amount W.

The set of fuel supply assemblies 30 displayed in FIG. 2 can include any combination of fuel supply assemblies 32, 132, 232, 332, 432, 532 described herein. In one example, all of the fuel supply assemblies in the set of fuel supply assemblies include a fuel nozzle with the tapered end 176 (FIG. 5), 476 (FIG. 8). In another example, all of the supply assemblies in the set of fuel supply assemblies include a fuel nozzle with the enlarged end 278 (FIG. 6). In yet another example, the set of fuel supply assemblies include a combination of tapered ends 176, 476 and enlarged ends 278, by way of non-limiting example every other fuel supply assembly defines a stage with one of a tapered end 176, 476 or an enlarged end 278.

Sequential fuel staging where the first equivalence ratio is higher than the rest of the stages benefits flame stability and achieves lower NOₓ emission. Further, a sequential decrease in the fuel/air ratio from a center of the fuel supply assembly radially outward helps to sequentially decrease the flame temperature from a smaller area to a bigger area and in turn reduce a region of high temperature and therefore also reduce NOₓ emission.

The various fuel supply assemblies described herein enable achieving a flow pattern where air supplied centrally creates an inward-out flow direction (from the center toward the combustor liner) and air supplied radially outward from the fuel nozzle creates an outward-in flow structure that causes higher level of fuel-air mixing across radial span of the dome resulting in uniform temperature distribution and hence lower NOₓ emission.

Benefits of the present disclosure include a combustor suitable for use with a gaseous H2 fuel. As outlined previously, gaseous H2 fuels have a higher flame temperature, likelihood for flashback and likelihood for auto-ignition than traditional fuels (e.g., fuels not containing hydrogen). That is, gaseous H2 fuels have a wider flammable range and a faster burning velocity than traditional fuels such petroleum-based fuels, or petroleum and synthetic fuel blends. These high burn temperatures of gaseous H2 fuels translate to higher NOₓ. In order to reduce NOₓ emissions, the various sequential stages described herein are incorporated to rapidly mix fuel and air downstream of the fuel supply assembly by using combination of converging or expanding passages. These features create a combination of converging or diverging flow to create rapid mixing between fuel and air that achieves uniform temperature within combustor and lower NOₓ emissions. Additional benefit of the sequential outward air circuit is to shape the flame structure by keeping high temperature regions in small central region of the combustor and thereby protect dome and liner walls. The fuel supply assembly further aides in flame shaping which helps with ensuring liner wall temperature, the dome wall temperature, the combustor exit temperature profile and pattern of the flame/gas exiting the combustor can be controlled. This control or shaping can further ensure that the combustion section or otherwise hot sections of the turbine engine do not fail or otherwise become ineffective by being overly heated, thus increasing the lifespan of the turbine engine. That is, the fuel supply assembly, as described herein, ensure an even, uniform, or otherwise desired flame propagation within the combustor.

Benefits associated with using hydrogen-containing fuel over traditional fuels include an eco-friendlier engine as the hydrogen-containing fuel, when combusted, generates less carbon pollutants than a combustor using traditional fuels. For example, a combustor including 100% hydrogen-containing fuel (e.g., the fuel is 100% H₂) would have zero carbon pollutants. The combustor, as described herein, can be used in instances where 100% hydrogen-containing fuel is used.

To the extent not already described, the different features and structures of the various embodiments can be used in combination, or in substitution with each other as desired. That is, any dilution hole coupling compressed air to the combustion chamber can include one or more of the aspects described herein. By way of non-limiting example, one or more dilution holes can include a channel or single radiused inlet fluidly coupled to one or more passages. By way of further non-limiting example, one or more dilution holes can include a chambered portion or at least one aperture. That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. Further, the radiused inlet coupled to the passageway can be applied to any flow path providing flow through one or more portions or components of a turbine engine. That is, aspects of the disclosure are illustrated in the context of the dilution holes of a combustor, however, other passages within the turbine engine are contemplated. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:

A turbine engine comprising a compressor section, a combustion section, and a turbine section in serial fluid arrangement, the combustion section comprising a combustor liner and a dome wall collectively forming at least a portion of a combustion chamber, with the dome wall having an opening; and a fuel supply assembly coupled to and extending through the opening, the fuel supply assembly comprising a fuel nozzle extending along a centerline axis and defining a first fuel/air circuit (F/A1); a series of air injectors surrounding the fuel nozzle; and a first fuel injector radially spaced from the fuel nozzle and interspersed with the series of air injectors to define a second fuel/air circuit (F/A2); wherein a first equivalence ratio (φ1) of the first fuel/air circuit (F/A1) is greater than a second equivalence ratio (φ2) of the second fuel/air circuit (F/A2): (φ1> φ2).

The turbine engine of any preceding clause, further comprising a second fuel injector radially spaced from the first fuel injector and interspersed with the series of air injectors to defined a third fuel/air circuit (F/A3), wherein a third equivalence ratio (φ3) of the third fuel/air circuit (F/A3) is less than the first equivalence ratio (φ1): (φ1> φ3).

The turbine engine of any preceding clause, wherein the first fuel injector and the second fuel injector are part of a set of fuel injectors interspersed with the series of air injectors to define a series of fuel/air circuits (F/A1, F/A2... F/An).

The turbine engine of any preceding clause, wherein the equivalence ratio for each fuel/air circuit in the series of fuel/air circuits sequentially decreases.

The turbine engine of any preceding clause, wherein the first equivalence ratio (φ1) is less than 2.

The turbine engine of any preceding clause, wherein the fuel nozzle comprises a first air supply conduit terminating in a first air outlet, and extending along the centerline axis and a first fuel supply conduit circumscribing the first air supply conduit and terminating in a first fuel outlet about the first air outlet to define the first fuel/air circuit.

The turbine engine of any preceding clause, wherein the first fuel injector comprises a second fuel supply conduit terminating in a second fuel outlet.

The turbine engine of any preceding clause, wherein the series of air injectors are concentrically arranged about the fuel nozzle and include a second air supply conduit terminating in a second air outlet, the second fuel outlet and the second air outlet together defining the second fuel/air circuit.

The turbine engine of any preceding clause, wherein the fuel nozzle comprises a tapered end.

The turbine engine of any preceding clause, wherein the fuel nozzle comprises an enlarged end.

The turbine engine of any preceding clause, further comprising stages with fuel nozzles comprising a combination of tapered and enlarged ends.

The turbine engine of any preceding clause, wherein the fuel supply assembly comprises a monolithic body.

The turbine engine of any preceding clause, wherein the series of air injectors include at least one swirler.

The turbine engine of any preceding clause, wherein a fuel swirler is provided within the fuel nozzle.

The turbine engine of any preceding clause, wherein an outlet associated with each of the fuel nozzle, the series of air injectors, and the first fuel injector are axially unaligned.

The turbine engine of any preceding clause, wherein at least one outlet associated with the series of air injectors or the first fuel injector is axially aligned with the fuel nozzle.

The turbine engine of any preceding clause, further comprising flow structures angled inward toward the centerline axis and flow structures angled outward away from the centerline axis to define a variable fuel staging assembly.

The turbine engine of any preceding clause, further comprising flow structures angled inward toward the centerline axis to define a nozzle fuel staging assembly.

The turbine engine of any preceding clause, further comprising flow structures angled outward away from the centerline axis to define a diffuser fuel staging assembly.

The turbine engine of any preceding clause, wherein the fuel nozzle defines a diameter and the first fuel/air circuit terminates in a first distal end spaced from the dome wall a first length, the second fuel/air circuit terminates in a second distal end spaced from the dome wall a second length, the third fuel/air circuit terminates in a third distal end spaced from the dome wall a third length, and wherein the first length, the second length, and the third length are a function of the diameter.

The turbine engine of any preceding clause, wherein the series of air injectors are concentrically arranged about the fuel nozzle.

The turbine engine of any preceding clause, wherein at least one air injector in the series of air injectors is free of swirlers to define an axial flow.

The turbine engine of any preceding clause, wherein the dome wall further comprises a set of flame shaping openings.

The turbine engine of any preceding clause, further comprising at least one swirler provided within the series of air injectors.

The turbine engine of any preceding clause, further comprising a third fuel injector including a third fuel supply conduit terminating in a third fuel outlet.

The turbine engine of any preceding clause, further comprising a third air supply conduit terminating in a third air outlet, the third fuel outlet and the third air outlet together defining a third fuel/air circuit.

The turbine engine of any preceding clause, further comprising a fourth air supply conduit terminating in a fourth air outlet.

The turbine engine of any preceding clause, wherein 10% to 45% of a total amount of compressed air is allocated to the combustor to define an individual air supply amount.

The turbine engine of any preceding clause, wherein each of the series of air injectors is allotted an amount of the individual air supply amount.

The turbine engine of any preceding clause, wherein the first air supply conduit is allotted a first air supply that ranges from 0% to 5% of the individual air supply amount.

The turbine engine of any preceding clause, wherein the second air supply conduit is allotted a second air supply that ranges from 10% to 45% of the individual air supply amount.

The turbine engine of any preceding clause, wherein the third air supply conduit is allotted a third air supply that ranges from 15% to 55% of the individual air supply amount.

The turbine engine of any preceding clause, wherein the fourth air supply conduit is allotted a fourth air supply that ranges from 0% to 65% of the individual air supply amount.

The turbine engine of any preceding clause wherein the nozzle fuel staging assembly generates combustion gases with an inward swirl pattern.

The turbine engine of any preceding clause wherein the nozzle fuel staging assembly generates combustion gases with a combination swirl pattern.

The turbine engine of any preceding clause wherein the nozzle fuel staging assembly generates combustion gases with a V-shaped swirl pattern.

## Claims

1. A turbine engine (10) comprising:
a compressor section (12), a combustion section (14), and a turbine section (16) in serial fluid arrangement, the combustion section (14) comprising:
a combustor liner (42) and a dome wall (48, 148, 248, 348, 448, 548) collectively forming at least a portion of a combustion chamber (50, 150, 250, 350, 450, 550), with the dome wall (48, 148, 248, 348, 448, 548) having an opening (74, 174, 274, 374); and
a fuel supply assembly (32, 132, 232, 332, 432, 532) coupled to and extending through the opening (74, 174, 274, 374), the fuel supply assembly (32, 132, 232, 332, 432, 532) comprising:
a fuel nozzle (34, 134, 234, 334, 434, 534) extending along a centerline axis (57, 157, 257, 357, 457, 557) and defining a first fuel/air circuit (F/A₁);
a series of air injectors (38, 138) surrounding the fuel nozzle (34, 134, 234, 334, 434, 534); and
a first fuel injector (186a, 286a, 386a) radially spaced from the fuel nozzle (34, 134, 234, 334, 434, 534) and interspersed with the series of air injectors (38, 138) to define a second fuel/air circuit (F/A₂);
wherein a first equivalence ratio (φ₁) of the first fuel/air circuit (F/A₁) is greater than a second equivalence ratio (φ₂) of the second fuel/air circuit (F/A₂): (φ₁> φ₂).

2. The turbine engine (10) of claim 1, further comprising a second fuel injector (186b, 286b, 386b) radially spaced from the first fuel injector (186a, 286a, 386a) and interspersed with the series of air injectors (38, 138) to defined a third fuel/air circuit (F/A₃), wherein a third equivalence ratio (φ₃) of the third fuel/air circuit (F/A₃) is less than the first equivalence ratio (φ₁): (φ₁> φ₃).

3. The turbine engine (10) of claim 2, wherein the first fuel injector (186a, 286a, 386a) and the second fuel injector (186b, 286b, 386b) are part of a set of fuel injectors (36, 136, 236, 336) interspersed with the series of air injectors (38, 138) to define a series of fuel/air circuits (F/A₁, F/A₂...F/Aₙ).

4. The turbine engine (10) of claim 3, wherein the equivalence ratio for each fuel/air circuit in the series of fuel/air circuits sequentially decreases.

5. The turbine engine (10) of claim 3 or 4, wherein the first equivalence ratio (φ₁) is less than 2.

6. The turbine engine (10) of any of claims 2-5, wherein the fuel nozzle (34, 134, 234, 334, 434, 534) defines a diameter (D) and the first fuel/air circuit (F/A₁) terminates in a distal end spaced from the dome wall (48, 148, 248, 348, 448, 548) a first length (L1), the second fuel/air circuit (F/A₂) terminates in a first distal end (387a) spaced from the dome wall (48, 148, 248, 348, 448, 548) a second length (L2), the third fuel/air circuit terminates (F/A₃) in a third distal end (387c) spaced from the dome wall (48, 148, 248, 348, 448, 548) a third length (L3), and wherein the first length (L1), the second length (L2), and the third length (L3) are a function of the diameter (D).

7. The turbine engine (10) of any of claims 1-6, wherein the fuel nozzle (34, 134, 234, 334, 434, 534) comprises a first air supply conduit (180a, 280a, 380a, 480a, 580a) terminating in a first air outlet (181a, 281a, 381a, 481a), and extending along the centerline axis (57, 157, 257, 357, 457, 557) and a first fuel supply conduit (182a, 282a, 382a, 482a, 582a) circumscribing the first air supply conduit (180a, 280a, 380a, 480a, 580a) and terminating in a first fuel outlet (62, 183a, 283a, 383a, 483a) about the first air outlet (181a, 281a, 381a, 481a) to define the first fuel/air circuit (F/A₁).

8. The turbine engine (10) of claim 7, wherein the first fuel injector (186a, 286a, 386a) comprises a second fuel supply conduit (182b, 482b, 582b) terminating in a second fuel outlet (63, 183b, 483b).

9. The turbine engine (10) of claim 8, wherein the series of air injectors (38, 138) are concentrically arranged about the fuel nozzle (34, 134, 234, 334, 434, 534) and include a second air supply conduit terminating in a second air outlet (181b, 481b), the second fuel outlet (63, 183b, 483b) and the second air outlet (181b, 481b) together defining the second fuel/air circuit (F/A₂).

10. The turbine engine (10) of any of claims 1-5, wherein the fuel nozzle (34, 134, 234, 334, 434, 534) comprises a tapered end (176, 376, 476).

11. The turbine engine (10) of any of claims 1-5, wherein the fuel nozzle (34, 134, 234, 334, 434, 534) comprises an enlarged end (278).

12. The turbine engine (10) of any of claims 1-5, further comprising stages with fuel nozzles (34, 134, 234, 334, 434, 534) comprising a combination of tapered and enlarged ends (176, 278, 376, 476).

13. The turbine engine (10) of any of claims 1-5, wherein the fuel supply assembly (32, 132, 232, 332, 432, 532) comprises a monolithic body (58, 158).

14. The turbine engine (10) of any of claims 1-5, wherein the series of air injectors (38, 138) include at least one swirler (60, 160, 260, 360, 460, 560).

15. The turbine engine (10) of claim 14, wherein a fuel swirler is provided within the fuel nozzle (34, 134, 234, 334, 434, 534).
